Europäisches Patentamt

European Patent Office

Office européen des brevets

(19)

(11) Publication number : **0 308 375 B1**

(12) # EUROPEAN PATENT SPECIFICATION

(45) Date of publication of patent specification :
**03.06.92 Bulletin 92/23**

(51) Int. Cl.⁵ : **B60T 15/24**

(21) Application number : **88830357.5**

(22) Date of filing : **06.09.88**

(54) **Valve unit, particularly for use in the pneumatic braking system of a tractor, for controlling the braking of a towedvehicle.**

(30) Priority : **15.09.87 IT 6779087**

(43) Date of publication of application :
**22.03.89 Bulletin 89/12**

(45) Publication of the grant of the patent :
**03.06.92 Bulletin 92/23**

(84) Designated Contracting States :
**AT BE DE ES FR GB NL SE**

(56) References cited :
**EP-A- 0 114 192**
**DE-A- 3 044 228**
**FR-A- 2 347 243**

(73) Proprietor : **BENDIX HEAVY VEHICLE SYSTEMS ITALIA S.P.A.**
**Via Adriano 81**
**I-20128 Milano (IT)**

(72) Inventor : **Angelillo, Domenico**
**Via Pisa, 54**
**I-20099 Sesto San Giovanni (Milano) (IT)**

(74) Representative : **Quinterno, Giuseppe et al**
**c/o Jacobacci-Casetta & Perani S.p.A. Via Alfieri, 17**
**I-10121 Torino (IT)**

EP 0 308 375 B1

## Description

The present invention relates to a valve unit particularly for use in a pneumatic braking system of a tractor including two lines, for supply and operation respectively, for controlling the braking of a towed vehicle. More particularly, the invention concerns a valve unit comprising a hollow body in which are defined:

a supply chamber intended to be connected to a pressure source through a supply aperture and to a line for supplying pressure to the braking system of the towed vehicle through an outlet aperture;

a discharge chamber communicating with the atmosphere through a discharge aperture;

at least one first control chamber having an inlet aperture for the introduction of a brake-operating pressure; and

an outlet chamber intended to be connected to the line for supplying the brake-operating pressure to the braking system of the towed vehicle;

relay valve means controlled by the pressure in the control chamber being provided in the body, the valve means comprising

an obturator unit which is movable in the body and is adapted to cooperate with first and second valve seats for controlling communication between the outlet chamber and the discharge chamber and between the outlet chamber and the supply chamber, and

a movable control element sealingly slidably mounted between the control chamber and the outlet chamber and able to control the position of the obturator unit, so that the outlet chamber is disconnected from the discharge chamber and is connected to the supply chamber during service braking;

a stop valve including a seat formed in the supply chamber also being provided in the body, the stop valve being operatively associated with the relay valve means and adapted to disconnect the outlet aperture from the supply inlet when the pressure difference between the control chamber and the outlet chamber exceeds a predetermined value during service braking.

A valve unit for controlling the bracking of a towed vehicle (trailer) is disclosed in EP-A-0 114 192. In this known valve unit, when the trailer brake control line ruptures the flow of pressurised air from an air supply input port to an air supply output port is choked by a movable wall member which intercepts a pressage through which said air supply input end output ports normally communic.

The invention has the aim of improving the valve unit of the initially specified kind.

This aim is achieved according to the invention by a valve unit of that kind which is characterised in that the obturator of the stop valve is constituted by the obturator unit of the relay valve and in that the movable element for controlling the relay valve includes a piston which is adapted to thrust the obturator unit into a position in which the seat of the stop valve is closed, when the pressure difference between the control chamber and the outlet chamber exceeds the predetermined value.

The valve unit according to the invention may be consituted, for example, by a triple-control servo-distributor with an associated servo-diverter device.

Further characteristics and advantages of the invention will become clear from the detailed description which follows with reference to the appended drawings, provided purely by way of non-limiting example, in which:

Figure 1 is a sectioned schematic view of a triple-control servo-distributor with an incorporated servo-diverter according to the present invention, in a first operating condition, and

Figure 2 is a sectional view of the same servo-distributor, shown in a different operating condition.

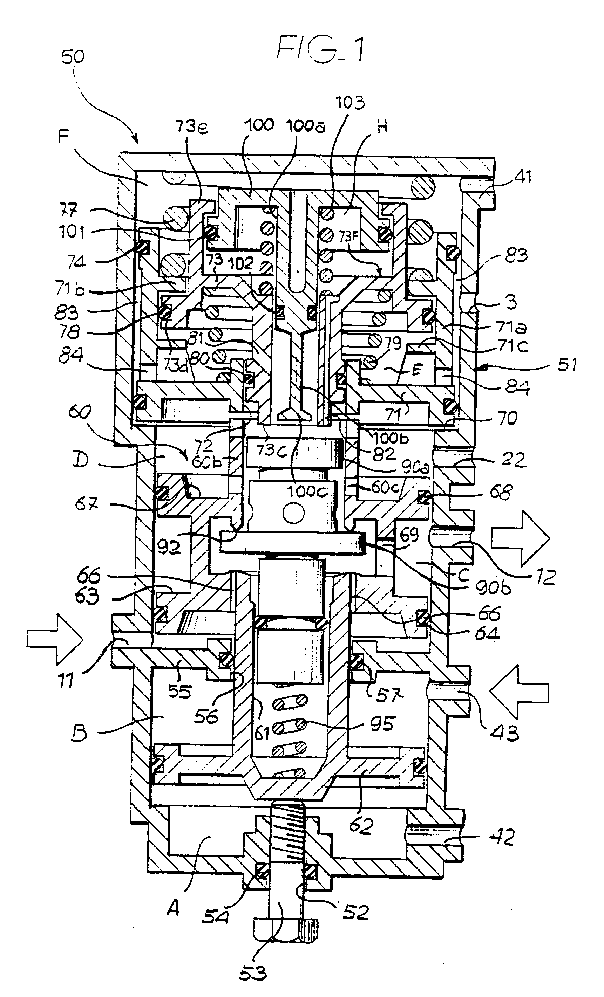

A triple control servo-distributor produced according to the present invention is generally indicated 50 in Figure 1. This comprises a body 51 which, in the embodiment illustrated, is essentially in the shape of an elongate cylinder. The body is hollow and in its central region has a supply connector 11 which is intended to be connected to a pressure reservoir of the braking system of a tractor. An outlet connector is indicated 12 and is intended to be connected to the line (the automatic line) for supplying pressure to the reservoirs of the braking system of a towed vehicle. As can be seen from Figure 1, in the embodiment illustrated as an example, the connectors 11 and 12 are in respective positions which are staggered axially relative to the longitudinal axis of the body 51.

Further end inlet connectors of the body 51 are indicated 41 and 42.

The body 51 has a further inlet connector 43 between the connectors 12 and 42, whilst a further outlet connector 22 is formed between the connectors 12 and 41.

An aperture for discharge to the atmosphere is indicated 3 and is formed in the wall of the body 51 between the connectors 22 and 41.

For ease of reading on the part of experts in the art, the above-described connectors have been labelled with reference numerals which correspond to international marking standards for the identification of the orifices of equipment for braking systems.

A partially threaded aperture 52 is formed in the base wall of the body 51 and an adjustment screw 53 with a correspondingly partially threaded shank is engaged therein. A sealing ring 54 is situated in the aperture 52 around the smooth portion of the shank of the screw 53.

In its axial portion between the connectors 12 and 43 the body 51 has a transverse wall 55 with a central aperture 56 in which a sealing ring 57 is situated.

A movable body is generally indicated 60 and has a central hollow portion 61 which is axially sealingly slidable in the aperture 56 of the wall 55. The portion of this body which extends below the wall 55 has a disc-shaped head 62 mounted sealingly for sliding like a piston in the portion of the body 51 between the connectors 42 and 43.

A variable-volume chamber, indicated A, is defined between the base wall of the body 51 and the movable head 60, 62. The connector 42 opens into this chamber and is intended to be connected to the outlet of one of the two sections of a duplex- or tandem-type distributor (not illustrated) which is operated by means of the brake pedal to cause braking in the two independent braking circuits of the tractor.

A further variable-volume chamber into which the connector 43 opens is indicated B and is defined between the head 62 of the movable body 60 and the wall 55 of the body 51. The connector 43 is intended to be connected to a manually-operated valve or distributor for operation of the parking and emergency braking. The chamber B is normally kept under pressure: the pressure is released by the operation of a manually-operated valve or distributor for parking and emergency braking connected to the connector 43.

A skirt portion 63 of the movable body 60 extending above the transverse wall 55 in the body 51 between the connectors 11 and 12 is provided externally with a sealing ring 64 and is sealingly slidable like a piston against the wall of the body. A series of apertures, indicated 66, is formed in this skirt portion 63 of the movable body and puts the cavity of the movable body into communication with the region situated above the wall 55 and communicating with the inlet connector 11.

A further skirt portion of the movable body 60, indicated 67, is axially spaced from the portion 63 and carries a sealing ring, indicated 68, at its periphery. The portion 67 of the movable body is sealingly slidable in the portion of the body 51 between the connectors 11 and 22 and defines a supply chamber C with the wall 55. In operation, the compressed air coming from a reservoir of the braking system of the tractor reaches the outlet connector 12 through connector 11 and chamber C and reaches the pressure reservoir of the braking system of the towed vehicle through the automatic line.

In the embodiment illustrated, the upper axial portion of the body 51 above the connector 22 has an enlarged diameter and forms a shoulder, indicated 70. A piston 71 is sealingly slidably mounted in this portion of the body and has a central aperture 72 through which a further tubular piston 73 is sealingly mounted for axial sliding.

The piston 71 has an outer tubular part 71a carrying sealing rings 74 and 75 in contact with the wall of the body 51.

A helical spring 77 is arranged between the top wall of the body 51 and an internal annular projection 71b of the piston 71.

The piston 73 has a smaller-diameter tubular portion provided externally with a sealing ring 80 and mounted for sliding in the aperture 72 of the reaction piston 71. An aperture formed in the wall of this portion of the piston 73 above the sealing ring 80 is indicated 81. The lower end edge of the piston 73, indicated 73c, can act as a valve seat, as will be made clear below.

A passage formed in the wall of the smaller-diameter tubular portion of the piston 73 is indicated 82.

The piston 73 has a larger-diameter portion 73d carrying an external sealing ring 78 and sealingly slidably mounted within the reaction piston 71 between the projection 71b and a lower shoulder 71c. A helical spring 79 is interposed between the pistons 71 and 73, tending to thrust the latter against the projection 71b of the former.

An annular space between the wall of the body 51 and a portion of the cylindrical wall of the piston 71 of smaller external diameter, between the sealing rings 74 and 75, is indicated 83. Apertures formed in this cylinder wall of the piston 71 below the shoulder 71c are indicated 84.

A further mushroom-shaped piston is indicated 100 and has a head portion which is provided externally with a sealing ring 101 and is mounted for sliding in the piston 73 between two shoulders 73e and 73f thereof. The piston 100 has a stem 100a mounted for sliding within the smaller-diameter tubular portion of the piston 73 and provided with a sealing ring 102. A helical spring 103 is arranged around the stem of the piston 100, between the head portion of this piston and the piston 73.

The distance between the shoulders 73e and 73f of the piston 73 is such that the sealing ring 102 is always above the passage 81, even when the head of the piston 100 abuts the shoulder 73f.

The stem of the piston 100 has a lower extension 100b of reduced diameter, which extends with wide clearance into the smaller-diameter tubular portion of the piston 73, in proximity of the seat 73c. The extension 100b of the piston 100 terminates with an enlarged end portion 100c, having a diameter smaller than that of the piston 73.

A variable-volume chamber between the portion 67 of the movable element 60 and the piston 71 is indicated D. The outlet connector 22 faces into this chamber.

A discharge chamber between the pistons 71 and 73 and permanently communicating with the discharge aperture 3 through the aperture 84 and the annular interspace 83 is indicated E. This chamber can also communicate with the chamber D through the aperture 81 of the rod 73.

A control chamber between the top wall of the body 51 and the pistons 71, 73 and 100 is indicated F. The inlet connector 41 opens into this chamber.

As stated above, the movable body 60 is hollow, and its cavity 61 opens at the top towards the chamber D, through a tubular wall 60b which extends towards the piston 71 and has through-holes 60c.

A valve seat formed by an axial extension of the tubular part 60b facing towards the cavity of the movable element 60 is indicated 92.

A movable element, generally indicated 90, has at its top a head 90a facing the seat 73c of the piston 73, and in its central portion an annular ring 90b which faces the valve seat 92 on one side and the passages 66 formed in the movable element 60 on the other side.

Around the seat 92 and the ring 90b of the movable element 90, between the skirt portions 63 and 67, the movable body 60 has a cylindrical wall in which at least one aperture, indicated 69, is formed.

The above-described servo-distributor operates in the following manner.

In Figure 1, the servo-distributor is illustrated in the condition assumed at rest during normal running of the tractor. In this situation, the connector 43 is supplied with compressed air from the hand valve or distributor for operating the parking and emergency brakes: this pressure acts on the portion 62 of the movable element 60, tending to thrust this element downwardly against the adjustment screw 53. The compressed air which arrives through the inlet connector 11 passes into the chamber C through the holes 66 and, through the aperture 69, reaches the outlet connector 12 and the automatic supply line of the trailer reservoir. The ring 90b is situated against the seat 92, whilst the head 90a is spaced from the seat 73c of the piston 73. The chamber D is consequently not in communication with the chamber C, but communicates with the discharge chamber E through the passage 81. No pressure is therefore supplied to the controllable line for operating the braking of the trailer, connected to the connector 22.

If the brake pedal of the tractor unit is now operated, pressure is supplied to the chambers A and F through the connectors 41 and 42. The pressure in the chamber A causes the movable element 60 to rise, whilst the pressure in the chamber F initially causes the pistons 73 and 100 to descend together until the piston 73 abuts the shoulder 71c of the piston 71. This is because the spring 103 is preloaded. As soon as the head 90a of the movable element 90 is brought against the seat 73c, the chamber D is disconnected from the discharge chamber E. Further upward movement of the movable element 60 and downward movement of the piston 73 cause movement of the ring 90b away from the seat 92, so that the chamber D is put into communication with the chamber C through the holes 60c, the valve 90b-92 and the aperture 69. The compressed air present in the chamber C causes braking of the towed vehicle through the chamber D and the controllable line indicated to the connector 22.

The pressure which prevails in the chamber D is at all times present in the variable-volume chamber, indicated H, between the pistons 73 and 100. In fact, the chamber H communicates with the chamber D through the passage 82 formed in the piston 73.

As stated, the movable element 60 is moved upwards during service braking, but not sufficiently to cause closure of the holes 66 by the ring 90b of the movable element 90.

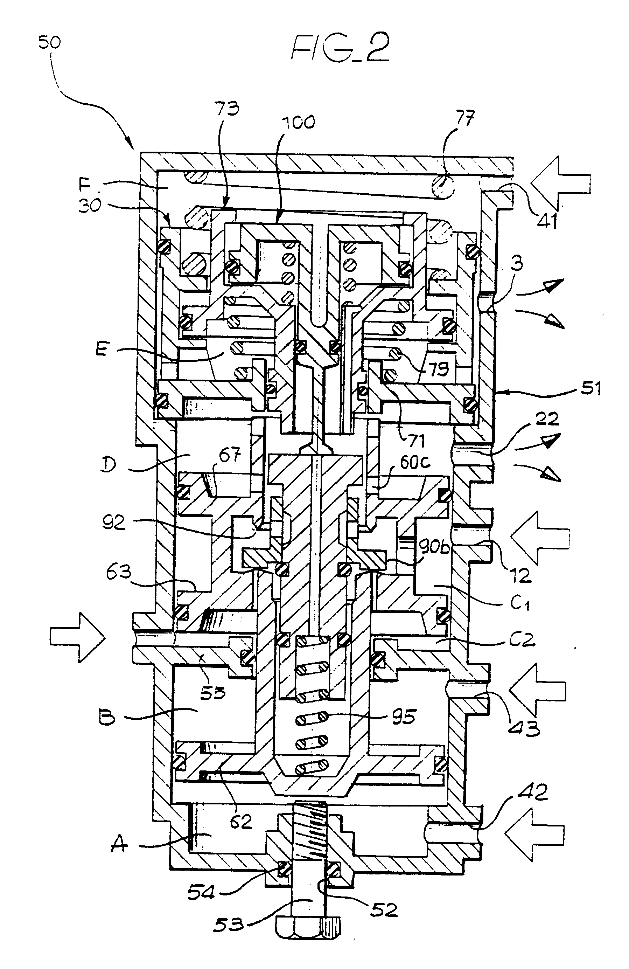

If the controllable line for operating the braking of the trailer is broken during a service braking phase, there is a loss of pressure in the chamber D. The movable body 60 therefore moves further upwards, whilst the piston 100 moves downwards until it abuts the shoulder 73f. The movable element 90 is thrust downwardly by the piston 100 and the ring 90b shuts off the holes 66, as illustrated in Figure 2. In this condition, the supply chamber C is divided into two regions, indicated $C_1$ and $C_2$, which are not in communication with each other. The region $C_1$ is enclosed between the portions 63 and 67 of the movable element and communicates with the connector 12. The region $C_2$ is enclosed between the wall 55 and the portion 63 of the movable element and communicates with the supply connector 11.

In the condition shown in Figure 2, the region $C_1$, through the holes 60c, communicates with the chamber D and hence with the atmosphere, both through the discharge chamber E and through the point of breakage of the controllable line. The automatic line connected to the connector 12 therefore discharges rapidly the atmosphere and this, in known manner, causes the intervention of the automatic braking of the towed vehicle.

With reference once again to Figure 1, if the parking and emergency brakes of the tractor are operated during normal running, there is, in known manner, a loss of the pressure in the chamber B which was tending to hold the movable body 60 down. This body therefore moves upwards until the ring 90b leaves the seat 92 and the chamber C is put into communication with the chamber D. In this case also, the servo-distributor supplies brake-operating pressure through the controllable line connected to the connector 22, causing braking of the towed vehicle.

## Claims

1. A valve, particularly for use in a pneumatic braking system of a tractor having two lines, for supply and operation respectively, for controlling the braking of a towed vehicle, comprising a hollow body (51) in which are defined:

a supply chamber (C) intended to be connected to a pressure source through a supply aperture (11) of the body (51), and to a line for supplying pressure to the braking system of the towed vehicle through an outlet aperture (12);

a discharge chamber (E) communicating with the atmosphere through a discharge aperture (3);

at least one first control chamber (F) intended to receive a brake-operating pressure through an inlet aperture (41), and

an outlet chamber (D) intended to be connected to the line for supplying the brake-operating pressure to the braking system of the towed vehicle; relay valve means (73c, 90, 92) controlled by the pressure in the control chamber (F) being provided in the body (51); the relay valve means comprising

an obturator unit (90) which is movable in the body (51) and is adapted to cooperate with first and second valve seats (73c, 92) for controlling communication between the outlet chamber (D) and the discharge chamber (E) and between the outlet chamber (D) and the supply chamber (C), and

a movable control element (71, 73, 100) sealingly slidably mounted between the control chamber (F) and the outlet chamber (D) and able to control the position of the obturator unit (90), so that the outlet chamber (D) is disconnected from the discharge chamber (E) and is connected to the supply chamber (C) during service braking;

a stop valve (90b, 66) including a seat (66) formed in the supply chamber (C) also being provided in the body (51); the stop valve being operatively associated with the relay valve means (73c, 90, 92) and adapted to disconnect the outlet aperture (D) from the supply inlet (11) when the pressure difference between the control chamber (F) and the outlet chamber (D,H) exceeds a predetermined value during service braking;

characterised in that the obturator of the stop valve (66, 90b) is carried by the obturator unit (90) of the relay valve means (73c, 90, 92), and in that the movable control element (71, 73, 100) of the relay valve means includes a piston (100) which can thrust the obturator unit (90) into a position in which it closes the seat (66) of the stop valve (90b, 66) when the pressure difference between the control chamber (F) and the outlet chamber (D) exceeds the predetermined value.

**Revendications**

1. Valve utilisable en particulier dans le système de freinage pneumatique d'un véhicule tracteur, comportant deux circuits, respectivement d'alimentation et de fonctionnement, en vue de commander le freinage d'un véhicule remorqué, comprenant un corps creux (51), dans lequel sont définies :

une chambre d'alimentation (C) destinée à être connectée à une source de pression par l'intermédiaire d'un orifice d'alimentation (11) du corps (51), et à un circuit servant à alimenter en pression le système de freinage du véhicule remorqué, par l'intermédiaire d'un orifice de sortie (12) ;

une chambre de décharge (E) communicant avec l'atmosphère par l'intermédiaire d'un orifice de décharge (3) :

au moins une première chambre de commande (F) destinée à recevoir une pression d'actionnement du dispositif de freinage par l'intermédiaire d'un orifice d'entrée (41),

et une chambre de sortie (D) destinée à être connectée au conduit en vue de fournir la pression d'actionnement du dispositif de freinage au système de freinage du véhicule remorqué : des moyens de valves de relais (73c, 90, 92), commandés par la pression règnant dans la chambre de commande (F) étant installés dans le corps (51) ; les moyens de valves de relais comprenant :

un obturateur (90) qui peut être déplacé dans le corps (51) et qui est apte à coopérer avec un premier siège de valve et avec un second siège de valve (73c, 92) dans le but de commander la communication entre la chambre de sortie (D) et la chambre de décharge (E), ainsi qu'entre la chambre de sortie (D) et la chambre d'alimentation (C),

et un élément de commande mobile (71, 73, 100) monté pour coulisser de façon étanche entre la chambre de commande (F) et la chambre de sortie (D) et apte à commander la position de l'obturateur de façon telle que la chambre de sortie (D) soit déconnectée de la chambre de décharge (E) et soit connectée à la chambre d'alimentation (C) pendant le freinage de service normal ;

une valve d'arrêt (90b, 66) comportant un siège (66) ménagé dans la chambre d'alimentation (C) étant également installée dans le corps (51) ; la valve d'arrêt étant associée fonctionnellement aux moyens (73c, 90, 92) de valve de relais et apte à déconnecter l'orifice (D) de sortie de l'entrée d'alimentation (11) lorsque la différence de pression entre la chambre de commande (F) et la chambre de sortie (D, H) excède une valeur prédéterminée au cours du freinage de service normal ;

caractérisé en ce que l'obturateur de la valve d'arrêt (66, 90b) est porté par l'unité d'obturation (90) du moyen de valves de relais (73c, 90, 92), et en ce que l'élément de commande mobile (71, 73, 100) du moyen de valve de relais comporte un piston (100) qui peut pousser l'unité d'obturation (90) jusque dans une position dans laquelle elle ferme le siège (66) de la valve d'arrêt (90b, 66) lorsque la différence de pression entre la chambre de commande (F) et la chambre de sortie (D) excède la valeur prédéterminée.

**Patentansprüche**

1. Ventil, insbesondere zur Verwendung im pneumatischen Bremssystem eines Zugfahrzeugs, mit zwei Leitungen zur Zufuhr bzw. zum Betrieb, zur Steuerung der Bremsen eines Anhängers, umfassend einen Hohlkörper (51), in dem folgendes ausgebildet ist:

eine Zufuhrkammer (C) zur Verbindung mit einer Druckquelle durch eine Zufuhröffnung (11) des Körpers (51), und mit einer Leitung zur Zufuhr von Druck durch eine Auslaßöffnung (12) an das Bremssystem des Anhängers; eine Abflußkammer (E), die über eine Abflußöffnung (3) mit der Atmosphäre verbunden ist;

mindestens eine erste Steuerkammer (F) zum Empfangen eines Bremsbetriebsdruckes durch eine Einlaßöffnung (41), und

eine Auslaßkammer (D) zur Verbindung mit der Leitung zur Zufuhr des Bremsbetriebsdruckes an das Bremssystem des Anhängers; eine Relaisventilvorrichtung (73c, 90, 92), die durch den Druck in der in dem Körper (51) vorgesehenen Steuerkammer (F) gesteuert wird; wobei die Relaisventilvorrichtung folgendes umfaßt:

eine Dichtungseinheit (90), die in dem Körper (51) beweglich ist und mit den ersten und zweiten Ventilsitzen (73c, 92) zur Steuerung der Verbindung zwischen der Auslaßkammer (D) und der Abflußkammer (E) und zwischen der Auslaßkammer (D) und der Zufuhrkammer (C) zusammenwirkt, und

ein bewegliches Steuerelement (71, 73, 100), welches abdichtend verschiebbar zwischen der Steuerkammer (F) und der Auslaßkammer (D) angeordnet ist und die Stellung der Dichtungseinheit (90) steuern kann, so daß die Auslaßkammer (D) während der Betriebsbremsung gegenüber der Abflußkammer (E) abgedichtet und mit der Zufuhrkammer (C) verbunden ist;

ein Anschlagventil (90b, 66), einschließlich einem Sitz (66), das in der Zufuhrkammer (C) ausgebildet ist, welche ebenfalls in dem Körper (51) vorgesehen ist; wobei das Anschlagventil im Betrieb mit der Relaisventilvorrichtung (73c, 90, 92) verbunden ist und die Auslaßöffnung (D) von dem Zufuhreinlaß (11) trennt, wenn der Druckunterschied zwischen der Steuerkammer (F) und der Auslaßkammer (D,H) während der Betriebsbremsung einen vorbestimmten Wert überschreitet;

dadurch gekennzeichnet, daß das Dichtungselement des Anschlagsventils (66, 90b) von der Dichtungseinheit (90) der Relaisventilvorrichtung (73c, 90, 92) getragen wird, und dadurch, daß das bewegliche Steuerelement (71, 73, 100) einen Kolben (100) aufweist, der die Dichtungseinheit (90) in eine Position schieben kann, in der sie den Sitz (66) des Anschlagventils (90b, 66) schließt, wenn der Druckunterschied zwischen der Steuerkammer (F) und der Auslaßkammer (D) den vorbestimmten Wert überschreitet.

# FIG_1

# FIG_2